# EUROPÄISCHE PATENTSCHRIFT

(11) **EP 2 692 687 B1**
(45) Veröffentlichungstag und Bekanntmachung des Hinweises auf die Patenterteilung: **27.05.2015**
(21) Anmeldenummer: 13175014.3
(22) Anmeldetag: 04.07.2013
(51) Int. Cl.: B66F 9/075, B66F 17/00, B60Q 1/00

(54) **Fahrassistenzeinrichtung und Flurförderzeug mit Fahrassistenzeinrichtung**
Driving aid device and an industrial truck with driving aid device
Dispositif d'assistance à la conduite et chariot de manutention doté d'un dispositif d'assistance à la conduite

(30) Priorität: 31.07.2012 DE 102012106989
(43) Veröffentlichungstag der Anmeldung: 05.02.2014
(73) Patentinhaber: Linde Material Handling GmbH, 63743 Aschaffenburg (DE)
(72) Erfinder: Adami, Peter, 63849 Leidersbach (DE)
(74) Vertreter: Geirhos, Johann

(56) Entgegenhaltungen:
- DE-A1-102006 002 960
- DE-A1-102007 063 226

## Beschreibung

Die Erfindung betrifft eine Fahrassistenzeinrichtung für ein Flurförderzeug sowie ein Flurförderzeug mit einer solchen Fahrerassistenzeinrichtung. Insbesondere betrifft die Erfindung eine Fahrerassistenzeinrichtung für ein Flurförderzeug mit mindestens einem heckseitigen, gelenkten Rad, die an dem Flurförderzeug angeordnet einen Lichteffekt auf die Fahrbahn projizieren kann.

Bei diversen Fahrzeugen, z.B. Bussen, Wohnmobilen und Lastkraftwagen, ist bekannt, diese mit einem Kamerasystem auszustatten, um bei für den Fahrer unübersichtlichen und schwierigen Fahrsituationen Kollisionen mit Hindernissen zu vermeiden sowie eine Einschätzung des Fahrwegs zu ermöglichen, die über Spiegel oder unter direkter Sicht nur schwer möglich ist. Auch bei Flurförderzeugen, insbesondere Gegengewichtsgabelstaplern ist der Einsatz von Kamerasystemen bekannt. Aus der DE 10 2007 063 226 A1 ist bekannt, eine mögliche Fahrspur in Abhängigkeit eines Lenkwinkels in die Anzeige eines Kamerabildes einzublenden, um anzuzeigen, ob bei dem eingeschlagenen Lenkwinkel ein mögliches Hindernis sich in dem Fahrweg befindet.

Nachteilig an diesem Stand der Technik ist, dass die Anzeige des Kamerabildes keinen räumlichen Eindruck gewährt und nur eine deutlich verkleinerte Darstellung des Fahrweges gewährt. Dadurch erfordert es von dem Fahrer eine hohe Aufmerksamkeit, zu erfassen, ob ein Hindernis in dem Fahrweg liegt oder nicht.

Flurförderzeuge in der Ausführungsform als Gegengewichtsgabelstapler sind häufig so aufgebaut, dass an der Vorderseite mit dem Hubmast der Antrieb über eine Vorderachse mit nicht gelenkten Rädern erfolgt. Am Heck des Gegengewichtsgabelstaplers ist mit größtmöglichem Hebelarm gegenüber dem Hubmast ein Gegengewicht angeordnet, unter dem ein oder zwei gelenkte Räder sich befinden. Die gelenkten Räder sind dabei im Regelfall nicht angetrieben. Alternativ ist als Ausführungsform auch bekannt, insbesondere für Dreiradstapler, die Funktion der Lenkung und gegebenenfalls des Antriebs in einem einzigen, unter dem Gegengewicht angeordneten Rad zusammenzufassen. Auch Flurförderzeuge in der Ausführungsform als Lagertechnikgeräte, beispielsweise Hubwagen, Schubmaststapler, Kommissionierer, insbesondere Horizontalkommissionierer oder Vertikalkommissionierer, und Regalstapler werden über ein oder mehrere Räder am Heck gelenkt. In allen diesen Fällen weisen jedoch die gelenkten Rädern sehr große Einschlagwinkel auf, um einen kleinstmöglichen Wendekreis zu erreichen und, insbesondere auch in schmalen Regalgassen, eine Fahrt um 90° zu ermöglichen, um eine Lastaufnahmevorrichtung, beispielsweise eine Lastgabel, auf einen Regalplatz auszurichten. Dabei sind Einschlagwinkel um bis nahezu 90° üblich, entsprechend einer Querstellung in Bezug auf die Fahrzeuglängsrichtung. Dies ermöglicht beispielsweise eine Drehung des Gegengewichtsgabelstaplers im Wesentlichen um die Vorderachse. Sowohl die Anordnung der gelenkten Räder in dem Heck, wie auch der große Einschlagwinkel der gelenkten Rädern führt dann dazu, dass beim Anfahren mit vollem Lenkeinschlag das Heck des Flurförderzeugs sehr stark ausschwenkt. Es können sich dadurch Schäden ergeben an angrenzenden Bauten, Lasten oder Regalen sowie auch an dem Fahrzeug, wenn die Kurvenbahn bzw. Bahn des Umfangs des Fahrzeugs falsch eingeschätzt oder nicht bedacht wird und es zu Kollisionen kommt. Auch bestehen eventuelle Risiken für Personen in der Umgebung, die sich hinten seitlich in dem Bereich eines solchen, nach dem Stand der Technik bekannten Flurförderzeugen befinden.

Aus der DE 10 2006 002 960 A1 ist ein Flurförderzeug mit einer optischen Warneinrichtung bekannt, bei dem ein in Fahrtrichtung weisender Lichteffekt auf die Fahrbahn projiziert wird, um Personen in der Umgebung vor dem herannahenden Flurförderzeug zu warnen.

Nachteilig an diesem Stand der Technik ist, dass durch diesen nicht die Risiken durch das seitlich Ausschwenken eines zuvor beschriebenen Flurförderzeugs bei Kurvenfahrt berücksichtigt werden.

Der Erfindung liegt daher die Aufgabe zu Grunde, ein Fahrerassistenzeinrichtung sowie ein Flurförderzeug, insbesondere einen Gegengewichtsgabelstapler, zur Verfügung zu stellen, mit dem es möglich ist, die Bewegung des Flurförderzeugs bei Kurvenfahrt leicht und schnell zu erkennen und dadurch die oben beschriebenen Nachteile zu vermeiden.

Diese Aufgabe wird durch eine Fahrassistenzeinrichtung mit den Merkmalen des Patentanspruchs 1 sowie ein Flurförderzeug mit den Merkmalen des Patentanspruchs 4 gelöst. Vorteilhafte Weiterbildungen und Ausgestaltungen der Erfindung sind in den Unteransprüchen angegeben.

Die Aufgabe wird gelöst durch eine Fahrerassistenzeinrichtung für ein Flurförderzeug mit mindestens einem heckseitigen, gelenkten Rad, die an dem Flurförderzeug angeordnet einen Lichteffekt auf die Fahrbahn projizieren kann, wobei der Lichteffekt eine Umfangsbahn des Außenumfangs des Fahrzeughecks für eine Kurvenfahrt des Flurförderzeugs auf der Fahrbahn markieren kann.

Wenn die Fahrerassistenzeinrichtung an einem Flurförderzeug angebracht wird und entsprechend eingestellt wird, macht die Umfangsbahn auf der Fahrbahn durch die Lichteffekte eine Linie als optische Vorschau kenntlich, auf der die Außenkante des Fahrzeughecks sich bei einer Weiterfahrt mit einem bestimmten Lenkeinschlagwinkel bewegen würde. Die Umfangsbahn entspricht dabei der äußersten Linie, die von der Außenkante des Fahrzeughecks überstrichen wird. Die Markierung der Umfangsbahn kann erfolgen, während das Flurförderzeug sich im Stillstand befindet, oder auch während das Flurförderzeug sich bewegt. Vorteilhaft wird es dadurch für eine das Flurförderzeug bedienende Person möglich, vor dem Anfahren zu erkennen, ob das Fahrzeugheck beim Ausschwenken mit einem bestimmten Lenkeinschlag ein Hindernis treffen würde oder nicht, da dann auch dieses Hindernis durch die Lichteffekte angeleuchtet würde bzw. erkennbar wird, dass das Hindernis sich innerhalb der Umfangsbahn befindet. Für eine das Flurförderzeug bedienende Person wird es somit leichter möglich, den Platzbedarf des Flurförderzeugs bei Kurvenfahrt einzuschätzen. Es können Kollisionen mit angrenzenden Gegenständen und Hindernissen, insbesondere mit einem Lastregal, vermieden werden. Vorteilhaft werden auch Personen, die sich in der Umgebung aufhalten, optisch auf die Fahrzeugreichweite im Fall einer Weiterfahrt des Flurförderzeugs aufmerksam gemacht und gewarnt. Diese erhöht zusätzlich die Sicherheit in den Fällen, wenn Personen sich entgegen den Sicherheitsvorschriften dennoch in dem Gefahrenbereich hinten seitlich in Bezug auf das Flurförderzeug aufhalten, insbesondere bei Gegengewichtsgabelstaplern, aber auch bei Lagertechnikgeräten. Die erfindungsgemäße Fahrerassistenzeinrichtung lässt sich als geschlossene, kompakte Einheit ausführen, die leicht im Wege der Nachrüstung an einem Flurförderzeug angebracht werden kann. Dabei ist es denkbar, als Umfangsbahn festgelegte Umfangsbahnen zu verwenden, die in jedem Fall ausreichend groß genug sind, so dass die tatsächliche Linie eines Fahrzeugs beim Ausschwenken in Kurvenfahrt innerhalb der Umfangsbahn liegt.

In einer günstigen Ausgestaltung der Erfindung kann der Lichteffekt aus einer durchgehenden oder einer unterbrochenen Linie bestehen, die der Umfangsbahn entspricht.

Als Lichteffekt sind alle optischen Effekte geeignet, durch die für eine Person erkennbar wird, dass eine bestimmte Linie von dem Fahrzeugheck als Umfangsbahn überstrichen wird.

Die Markierung der Umfangsbahn als Linien bzw. als unterbrochene Linie kann durch eine gebündelte Lichtquelle erfolgen.

Der Lichteffekt kann gemäß einer bevorzugten Ausführungsform der Erfindung durch einen Laser erzeugt werden.

Die Aufgabe wird auch gelöst durch ein Flurförderzeug mit mindestens einem heckseitigen, gelenkten Rad und einer zuvor beschriebenen Fahrerassistenzeinrichtung bei der der Lichteffekt zugehörig zu einem Lenkeinschlag eine Umfangsbahn des Außenumfangs des Fahrzeughecks im Falle einer Kurvenfahrt auf der Fahrbahn markieren kann.

Ein Flurförderzeug, das mit der erfindungsgemäßen Fahrerassistenzeinrichtung versehen ist, weist die bereits zuvor genannten Vorteile auf. Die Anzeige der Umfangsbahn erfolgt bevorzugt zu der Seite des Flurförderzeugs, zu der das Fahrzeugheck ausschwenkt und somit eine Gefahr einer Kollision mit Hindernissen besteht, kann alternativ jedoch auch beidseitig erfolgen. Vorteilhaft können das Flurförderzeug bedienende Person beurteilen, ob das Fahrzeugheck beim Ausschwenken mit einem bestimmten Lenkeinschlag ein Hindernis treffen würde oder nicht, wenn das Hindernis durch die Lichteffekte angeleuchtet wird oder sich innerhalb der Umfangsbahn befindet. Personen, die sich in der Umgebung aufhalten, werden durch die Lichteffekte auf den Schwenkbereich des Flurförderzeugs hingewiesen und gewarnt. Die erfindungsgemäße Lösung ist besonders vorteilhaft für alle Arten von Flurförderzeugen, die zumindest in einem Teil ihres Betriebes so bewegt werden, dass die Lenkung über die in Bewegungsrichtung hinten und somit ein oder mehrere heckseitigen Räder erfolgt. Bei dieser Anordnung ergibt sich ein besonders großes Ausschwenken seitlich, wenn ein starker Lenkeinschlag erfolgt. Die Erfindung ist daher beispielsweise auch anwendbar bei Gabelhubwagen, Schubmaststapler, Kommissionierer, insbesondere Horizontalkommissionierer oder Vertikalkommissionierer, und Regalstapler, die zumeist ein einzelnes lenkbares Antriebsrad aufweisen, wenn diese mit einer Lastgabel und Lastrollen voran bewegt werden. Auch bei diesen kommt es bei einem Lenkeinschlag zu einem erheblichen seitlichen Ausschwenken.

Vorteilhaft kann die Umfangsbahn beginnend von dem Fahrzeugheck bis ungefähr auf Höhe des maximalen seitlichen Ausschwenkens in Bezug auf die momentane Fahrzeuglängsachse markiert werden.

Dadurch wird für den Fahrer bzw. eine bedienende Person angezeigt und erkennbar, bis zu welcher maximalen seitlichen Breite das Fahrzeug ausschwenken wird und welche Hindernisse eventuell in diesen Bereich vorhanden sind.

In einer günstigen Ausführungsform kann die Umfangsbahn für den maximalen Lenkeinschlag angezeigt werden.

In einer einfachen Ausführungsform kann unabhängig vom momentan tatsächlichen Lenkeinschlagswinkel eine fixe Umfangsbahn für den maximalen Lenkeinschlag angezeigt werden. Der maximale Lenkeinschlag führt auch zu dem größtmöglichen Ausschwenken. Wenn sich daher innerhalb dieser Umfangsbahn keine Hindernisse befinden, kann auch mit jedem kleineren Lenkwinkel gefahren werden.

In einer Weiterbildung der Erfindung kann die Umfangsbahn für den momentanen Lenkeinschlag angezeigt werden.

Mit einer automatischen Anpassung und Nachführung der Umfangsbahn in Abhängigkeit von dem Lenkwinkel wird es für einen Fahrer bzw. eine bedienende Person möglich, beispielsweise im Stillstand des Flurförderzeugs, den Lenkeinschlag solange anzupassen, bevor mit dem Flurförderzeug weitergefahren wird, bis sichergestellt ist, dass keine Hindernisse mehr berührt werden können. Dabei ist es denkbar, neben der Umfangsbahn für den momentanen Lenkeinschlag auch zusätzlich die Umfangsbahn für einen maximalen Lenkeinschlag zu markieren.

Die Fahrassistenzeinrichtung kann durch einen Lenkeinschlag über einen bestimmten Mindestwinkel eingeschaltet werden.

Wenn nach Überschreiten eines gewissen Toleranzwinkels als Mindestwinkel durch den Lenkeinschlag selbst die Fahrassistenzeinrichtung eingeschaltet wird und dann der Lichteffekt auf die Fahrbahn projiziert wird, ist kein Einschalten durch eine Person erforderlich und steht die Markierung der Umfangsbahn immer dann zur Verfügung, wenn diese auch benötigt wird.

Vorteilhaft kann die Fahrassistenzeinrichtung durch einen Schalter eingeschaltet werden.

Dadurch kann erreicht werden, dass die Fahrerassistenzeinrichtung nicht im Dauerbetrieb arbeitet und irritiert oder als unangenehm empfunden wird.

Weiterhin kann die Fahrerassistenzeinrichtung bei Unterschreiten einer Grenzfahrgeschwindigkeit eingeschaltet werden. Da in der Regel ein Betrieb des Flurförderzeugs mit einem großen Lenkeinschlag bei niedrigen Fahrgeschwindigkeiten erfolgt, kann die Fahrerassistenzeinrichtung auf einfache Weise automatisch eingeschaltet werden.

Die Fahrassistenzeinrichtung kann einseitig oder beidseitig des Flurförderzeugs einen Lichteffekt auf die Fahrbahn projizieren.

Im Regelfall ist es besonders vorteilhaft, die Umfangsbahn auf derjenigen Seite des Flurförderzeugs zu markieren, auf die das Fahrzeugheck bei der nachfolgenden Fahrt aufgrund des Lenkeinschlags ausschwenken wird. Es können jedoch auch beide Fahrzeugseiten mit der Umfangsbahn markiert werden, insbesondere, wenn die Umfangsbahn des maximalen Lenkeinschlags markiert wird. Dadurch ergibt sich eine einfach umzusetzende Lösung, die keine Erfassung des exakten Lenkeinschlagwinkels erfordert und bei der auch keine umfangreicheren Berechnungen erforderlich sind.

In einer günstigen Ausgestaltung der Erfindung weist das Flurförderzeug ein Fahrerschutzdach und die Fahrassistenzeinrichtung eine im oberen Bereich des Fahrerschutzdaches angeordnete Lichtquelle für den Lichteffekt auf.

Das Fahrerschutzdach bietet eine hoch angeordnete Position, die die Darstellung der Umfangsbahn auf der Fahrbahn erleichtert.

Das Flurförderzeug kann einen Hubmast aufweisen und die Fahrassistenzeinrichtung eine im oberen Bereich des Hubmastes angeordnete Lichtquelle für den Lichteffekt.

Vor allem bei Flurförderzeugen, die keinen neigbaren Hubmast aufweisen, ist eine solche Anordnung vorteilhaft und bietet eine Möglichkeit für eine hohe Anordnung der Fahrerassistenzeinrichtung. Dies kann beispielsweise bei Hochhub-Gabelhubwagen, Schubmaststaplern, Kommissionierern, insbesondere Horizontalkommissionierern oder Vertikalkommissionierern, und Regalstaplern der Fall sein.

Das Flurförderzeug kann ein Gegengewicht aufweisen und die Fahrassistenzeinrichtung eine im oberen Bereich des Gegengewichts angeordnete Lichtquelle für den Lichteffekt.

Weitere Vorteile und Einzelheiten der Erfindung werden anhand des in den schematischen Figuren dargestellten Ausführungsbeispiels näher erläutert. Hierbei zeigt
- Fig. 1: eine schematische Darstellung eines erfindungsgemäßen Flurförderzeugs mit Fahrerassistenzeinrichtung in Aufsicht und
- Fig. 2: das erfindungsgemäße Flurförderzeug der Fig. 1 in Seitenansicht.

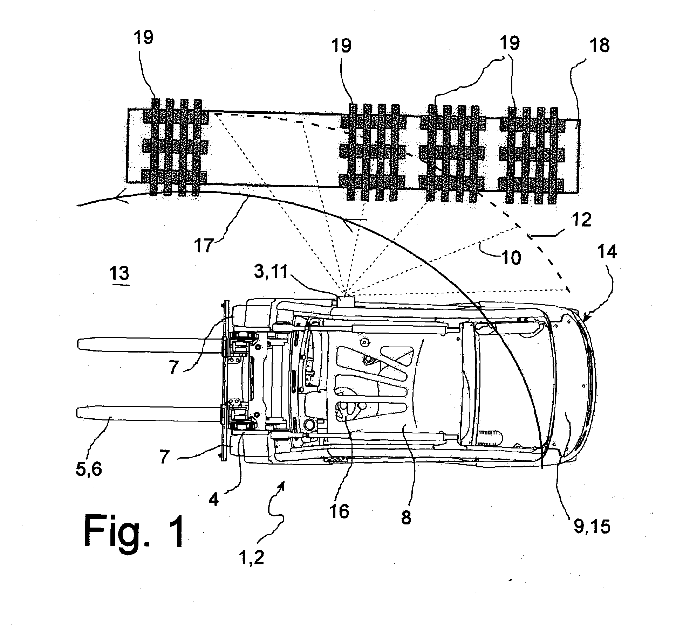

Die Fig. 1 zeigt eine schematische Darstellung eines erfindungsgemäßen Flurförderzeugs 1, hier beispielsweise eines Gegengewichtsgabelstaplers 2, mit einer Fahrerassistenzeinrichtung 3 in Aufsicht. Der Gegengewichtsgabelstapler 2 weist eine an einem Hubmast 4 geführte Lastaufnahmevorrichtung 5 in Form einer Lastgabel 6 auf. Der Hubmast 4 ist über einer Vorderachse mit Vorderrädern 7 angeordnet, über die der Gegengewichtsgabelstapler 2 angetrieben wird. Hinter dem Hubmast 4 befindet sich ein Fahrerschutzdach 8 und hinter dem Fahrerschutzdach 8 ein Gegengewicht 9. Unterhalb des Gegengewichts 9 und in der Fig. 1 nicht dargestellt befinden sich gelenkte Hinterräder, mit denen der Gegengewichtsgabelstapler 2 gelenkt wird. Die Fahrerassistenzeinrichtung 3 ist beispielsweise an dem Fahrerschutzdach 8 angeordnet und sendet Laserlicht 10 eines Lasers 11 oder gebündeltes Licht einer Lichtquelle als Lichteffekt aus, durch den eine Umfangsbahn 12 auf der Fahrbahn 13 markiert wird. Die Umfangsbahn 12 entspricht der Bewegung eines Außenumfangs 14 eines Fahrzeughecks 15 des Gegengewichtsgabelstapler 2, wenn dieser aus der dargestellten Position losfährt mit dem gewählten Lenkwinkel der Hinterräder, entsprechend einem Lenkeinschlag eines Lenkrads 16. Wenn der Gegengewichtsgabelstapler 2 aus der dargestellten Position losfährt, beschreibt die Mitte des Gegengewichts 9 die Linie 17 und der Außenumfang 14 des von dem Gegengewicht 9 gebildeten Fahrzeughecks 15 überstreicht die durch den Laser 11 markierte Umfangsbahn 12.

In der dargestellten Position des Gegengewichtsgabelstaplers 2 befindet sich neben dem Gegengewichtsgabelstapler 2 ein Lastregal 18, auf dem Paletten 19 abgesetzt sind. Die zu dem momentanen Lenkeinschlag des Lenkrads 16 dargestellte Umfangsbahn 12 fällt auf das Lastregal 18 und ist als Lichteffekt für einen Fahrer des Gegengewichtsgabelstaplers 2 gut erkennbar. Somit wird der Fahrer gewarnt, den Lenkeinschlag des Lenkrads 16 zu vermindern oder das Heranfahren an das Lastregal 18 zu überwachen und rechtzeitig den Gegengewichtsgabelstapler 2 zu stoppen. Auch würde eine Person, die sich zwischen Gegengewichtsgabelstapler 2 und Lastregal 18 befindet, durch das Licht der Umfangsbahn 12 gewarnt, dass sie sich in einem Gefahrenbereich befindet.

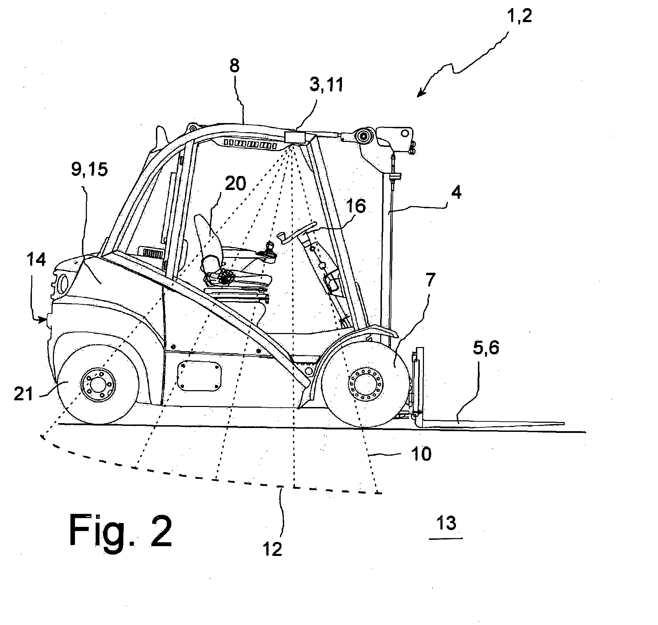

Die Fig. 2 zeigt den Gegengewichtsgabelstapler 2 als erfindungsgemäßes Flurförderzeug der Fig. 1 in Seitenansicht. An dem Fahrerschutzdach 8 ist die Fahrerassistenzeinrichtung 3 an der Oberseite seitlich befestigt. Die Lastaufnahmevorrichtung 5 in Form der Lastgabel 6 ist an dem Hubmast 4 geführt, der sich oberhalb der angetriebenen Vorderräder 7 befindet. Unterhalb des Fahrerschutzdaches 8 ist ein Fahrersitz 20 mit dem Lenkrad 16 angeordnet. Im Fahrzeugheck 15 befindet sich das Gegengewicht 9 mit unterhalb angeordneten gelenkten Hinterrädern 21. Die beispielsweise als Laser 11 ausgebildete Lichtquelle der Fahrerassistenzeinrichtung 3 sendet Laserlicht 10 aus, durch das auf der Fahrbahn 13 die Umfangsbahn 12, im vorliegenden Beispiel als unterbrochene Linie, markiert wird. Alternativ kann die Umfangsbahn 12 auch durch eine durchgehende Linie markiert werden.

Soweit das Lenkrad 16 über einen festgelegten Mindestwinkel hinaus aus der Geradeausstellung eingeschlagen wird, wird der Laser 11, oder alternativ eine andere Lichtquelle, der Fahrerassistenzeinrichtung 3 automatisch für die Dauer des Lenkeinschlags angeschaltet und die Umfangsbahn 12 zu dem momentanen Lenkeinschlagswinkel angezeigt. Dadurch ist für den Fahrer schnell und intuitiv zu jedem Zeitpunkt erfassbar, wohin sich bei einer Weiterfahrt das Fahrzeugheck 15 bewegt und womit der Außenumfang 14 kollidieren könnte. Dabei kann der Einschlagwinkel der gelenkten Hinterräder 21 oder des Lenkrads 16 durch alle nach dem Stand der Technik bekannten Verfahren und Vorrichtungen, insbesondere durch Sensoren, festgestellt werden und der Fahrerassistenzeinrichtung 3 zugeführt werden. Die hoch gelegene Anordnung der Fahrerassistenzeinrichtung 3 an dem Fahrerschutzdach 8 ermöglicht eine exakte und gute Darstellung der Umfangsbahn 12.

Die Erfindung ist nicht auf das hier geschilderte Beispiel eines Gegengewichtsgabelstaplers 2 als Flurförderzeug 1 beschränkt und kann bei allen Arten von Flurförderzeugen angewandt werden, bei denen es durch ein oder mehrere gelenkte heckseitige Räder zu einem erheblichen Ausschwenken des Fahrzeughecks bei Kurvenfahrt kommt.

## Patentansprüche

1. Fahrassistenzeinrichtung für ein Flurförderzeug (1) mit mindestens einem heckseitigen, gelenkten Rad (21), die an dem Flurförderzeug (1) angeordnet einen Lichteffekt auf die Fahrbahn (13) projizieren kann
**dadurch gekennzeichnet,**
**dass** der Lichteffekt eine Umfangsbahn (12) des Außenumfangs (14) des Fahrzeughecks (15) für eine Kurvenfahrt des Flurförderzeugs (1) auf der Fahrbahn (13) markieren kann.

2. Fahrerassistenzeinrichtung nach Anspruch 1,
**dadurch gekennzeichnet,**
**dass** der Lichteffekt aus einer durchgehenden oder einer unterbrochenen Linie besteht, die der Umfangsbahn (12) entspricht.

3. Fahrerassistenzeinrichtung nach Anspruch 1 oder 2,
**dadurch gekennzeichnet,**
**dass** der Lichteffekt durch einen Laser (11) erzeugt wird.

4. Flurförderzeug mit mindestens einem heckseitigen, gelenkten Rad (21) und einer Fahrassistenzeinrichtung (3) nach einem der Ansprüche 1 bis 3,
**dadurch gekennzeichnet,**
**dass** der Lichteffekt zugehörig zu einem Lenkeinschlag eine Umfangsbahn (12) des Außenumfangs (14) des Fahrzeughecks (15) im Falle einer Kurvenfahrt auf der Fahrbahn markieren (13) kann.

5. Flurförderzeug nach Anspruch 4,
**dadurch gekennzeichnet,**
**dass** die Umfangsbahn (12) beginnend von dem Fahrzeugheck (15) bis ungefähr auf Höhe des maximalen seitlichen Ausschwenkens in Bezug auf die momentane Fahrzeuglängsachse markiert werden kann.

6. Flurförderzeug nach Anspruch 4 oder 5,
**dadurch gekennzeichnet,**
**dass** die Umfangsbahn (12) für den maximalen Lenkeinschlag angezeigt werden kann.

7. Flurförderzeug nach einem der Ansprüche 4 bis 6,
**dadurch gekennzeichnet,**
**dass** die Umfangsbahn (12) für den momentanen Lenkeinschlag angezeigt werden kann.

8. Flurförderzeug nach einem der Ansprüche 4 bis 7,
**dadurch gekennzeichnet,**
**dass** die Fahrassistenzeinrichtung (3) durch einen Lenkeinschlag über einen bestimmten Mindestwinkel hinaus eingeschaltet werden kann.

9. Flurförderzeug nach einem der Ansprüche 4 bis 8,
**dadurch gekennzeichnet,**
**dass** die Fahrassistenzeinrichtung (3) durch einen Schalter eingeschaltet werden kann.

10. Flurförderzeug nach einem der Ansprüche 4 bis 9,
**dadurch gekennzeichnet,**
**dass** die Fahrerassistenzeinrichtung (3) bei Unterschreiten einer Grenzfahrgeschwindigkeit eingeschaltet werden kann.

11. Flurförderzeug nach einem der Ansprüche 4 bis 10,
**dadurch gekennzeichnet,**
**dass** die Fahrassistenzeinrichtung (3) einseitig oder beidseitig des Flurförderzeugs (1) einen Lichteffekt auf die Fahrbahn (13) projizieren kann.

12. Flurförderzeug nach einem der Ansprüche 4 bis 11,
**dadurch gekennzeichnet,**
**dass** das Flurförderzeug (1) ein Fahrerschutzdach (8) aufweist und die Fahrassistenzeinrichtung eine im oberen Bereich des Fahrerschutzdaches (8) angeordnete Lichtquelle für den Lichteffekt aufweist.

13. Flurförderzeug nach einem der Ansprüche 4 bis 12,
**dadurch gekennzeichnet,**
**dass** das Flurförderzeug (1) einen Hubmast (4) aufweist und die Fahrassistenzeinrichtung eine im oberen Bereich des Hubmastes (4) angeordnete Lichtquelle für den Lichteffekt aufweist.

14. Flurförderzeug nach einem der Ansprüche 4 bis 13,
**dadurch gekennzeichnet,**
**dass** das Flurförderzeug (1) ein Gegengewicht (9) aufweist und die Fahrassistenzeinrichtung eine im oberen Bereich des Gegengewichts (9) angeordnete Lichtquelle für den Lichteffekt aufweist.

## Claims

1. Driver assistance device for an industrial truck (1) having at least one rear-mounted steered wheel (21) which is arranged on the industrial truck (1) and can project a lighting effect onto the underlying surface (13),
**characterized**
**in that** the lighting effect can mark a circumferential path (12) of the outer circumference (14) of the vehicle rear (15) for cornering of the industrial truck (1) on the underlying surface (13).

2. Driver assistance device according to Claim 1,
**characterized**
**in that** the lighting effect is composed of a continuous line or interrupted line which corresponds to the circumferential path (12).

3. Driver assistance device according to Claim 1 or 2,
**characterized**
**in that** the lighting effect is generated by a laser (11).

4. Industrial truck having at least one rear-mounted steered wheel (21) and a driver assistance device (3) according to one of Claims 1 to 3,
**characterized**
**in that** the lighting effect associated with a steering lock can mark (13) a circumferential path (12) of the outer circumference (14) of the vehicle rear (15) in the case of cornering on the underlying surface.

5. Industrial truck according to Claim 4,
**characterized**
**in that** the circumferential path (12) can be marked starting from the vehicle rear (15) as far as approximately the level of the maximum lateral pivoting out with respect to the instantaneous longitudinal axis of the vehicle.

6. Industrial truck according to Claim 4 or 5,
**characterized**
**in that** the circumferential path (12) can be displayed for the maximum steering lock.

7. Industrial truck according to one of Claims 4 to 6,
**characterized**
**in that** the circumferential path (12) can be displayed for the instantaneous steering lock.

8. Industrial truck according to one of Claims 4 to 7,
**characterized**
**in that** the driver assistance device (3) can be switched on by a steering lock beyond a specific minimum angle.

9. Industrial truck according to one of Claims 4 to 8,
**characterized**
**in that** the driver assistance device (3) can be switched on by a switch.

10. Industrial truck according to one of Claims 4 to 9,
**characterized**
**in that** the driver assistance device (3) can be switched on when a limiting speed is undershot.

11. Industrial truck according to one of Claims 4 to 10,
**characterized**
**in that** the driver assistance device (3) can project a lighting effect onto the underlying surface (13) on one side or on both sides of the industrial truck (1).

12. Industrial truck according to one of Claims 4 to 11,
**characterized**
**in that** the industrial truck (1) has a driver protective roof (8) and the driver assistance device has a light source, arranged in the upper region of the driver protective roof (8), for the lighting effect.

13. Industrial truck according to one of Claims 4 to 12,
**characterized**
**in that** the industrial truck (1) has a lifting mast (4), and the driver assistance device has a light source, arranged in the upper region of the lifting mast (4), for the lighting effect.

14. Industrial truck according to one of Claims 4 to 13,
**characterized**
**in that** the industrial truck (1) has a counter weight (9), and the driver assistance device has a light source, arranged in the upper region of the counter weight (9), for the lighting effect.

## Revendications

1. Dispositif d'assistance à la conduite d'un chariot élévateur (1) présentant au moins une roue arrière directrice (21), le dispositif d'assistance étant disposé sur le chariot élévateur (1) et pouvant projeter un effet lumineux sur la piste de déplacement (13),
**caractérisé en ce que**
l'effet lumineux permet de repérer sur la piste de déplacement (13) une piste périphérique (12) à la périphérie extérieure (14) de l'arrière (15) du véhicule en vue d'un déplacement en virage du chariot élévateur (1).

2. Dispositif d'assistance au conducteur selon la revendication 1, **caractérisé en ce que** l'effet lumineux est constitué d'une ligne continue ou interrompue qui correspond à la piste périphérique (12).

3. Dispositif d'assistance au conducteur selon les revendications 1 ou 2, **caractérisé en ce que** l'effet lumineux est formé par un laser (11).

4. Chariot élévateur présentant au moins une roue arrière directrice (21) et un dispositif (3) d'assistance à la conduite selon l'une des revendications 1 à 3,
**caractérisé en ce que**
l'effet lumineux associé à une intervention de braquage, permet de repérer (13) sur la piste de déplacement une piste périphérique (12) à la périphérie extérieure (14) de l'arrière (15) du véhicule en cas de déplacement en virage.

5. Chariot élévateur selon la revendication 4, **caractérisé en ce que** la piste périphérique (12) peut être repérée depuis l'arrière (15) du véhicule jusqu'à environ le niveau de la déviation latérale maximale par rapport à l'axe longitudinal du véhicule à chaque instant.

6. Chariot élévateur selon les revendications 4 ou 5, **caractérisé en ce que** la piste périphérique (12) peut être affichée pour l'intervention maximale de braquage.

7. Chariot élévateur selon l'une des revendications 4 à 6, **caractérisé en ce que** la piste périphérique (12) peut être affichée pour l'intervention de braquage à tout moment.

8. Chariot élévateur selon l'une des revendications 4 à 7, **caractérisé en ce que** le dispositif (3) d'assistance à la conduite peut être branché par une intervention de braquage depuis un angle minimum défini.

9. Chariot élévateur selon l'une des revendications 4 à 8, **caractérisé en ce que** le dispositif (3) d'assistance à la conduite peut être branché par un commutateur.

10. Chariot élévateur selon l'une des revendications 4 à 9, **caractérisé en ce que** le dispositif (3) d'assistance à la conduite peut être branché lorsqu'une vitesse de déplacement limite n'est pas atteinte.

11. Chariot élévateur selon l'une des revendications 4 à 10, **caractérisé en ce que** le dispositif (3) d'assistance à la conduite peut projeter un effet lumineux sur la piste de déplacement (13) d'un côté ou des deux côtés du chariot élévateur (1).

12. Chariot élévateur selon l'une des revendications 4 à 11, **caractérisé en ce que** le chariot élévateur (1) présente un toit (8) de protection de conducteur et **en ce que** le dispositif d'assistance à la conduite présente une source lumineuse qui assure l'effet lumineux et disposée dans la partie supérieure du toit (8) de protection du conducteur.

13. Chariot élévateur selon l'une des revendications 4 à 12, **caractérisé en ce que** le chariot élévateur (1) présente un mât de levage (4) et **en ce que** le dispositif d'assistance à la conduite présente une source lumineuse formant l'effet lumineux et disposée dans la partie supérieure du mât de levage (4).

14. Chariot élévateur selon l'une des revendications 4 à 13, **caractérisé en ce que** le chariot élévateur (1) présente un contrepoids (9) et **en ce que** le dispositif d'assistance à la conduite présente une source lumineuse assurant l'effet lumineux, disposée dans la partie supérieure du contrepoids (9).
